# EUROPEAN PATENT APPLICATION

(11) **EP 4 439 149 A1**
(43) Date of publication of application: **02.10.2024**
(21) Application number: 22895721.3
(22) Date of filing: 21.11.2022
(51) Int. Cl.: G02B 27/01, B60K 35/00, G02B 7/00, G02B 7/182

(54) **IMAGE RADIATION DEVICE**

(30) Priority: 22.11.2021 JP 2021189737; 22.11.2021 JP 2021189738; 22.11.2021 JP 2021189739
(71) Applicant: KOITO MANUFACTURING CO., LTD., Minato-ku, Tokyo, 108-8711 (JP)
(72) Inventor: HORI, Masahiro, Shizuoka-shi, Shizuoka 424-8764 (JP); ENDO, Masahiro, Shizuoka-shi, Shizuoka 424-8764 (JP); FUJIYOSHI, Takatomo, Shizuoka-shi, Shizuoka 424-8764 (JP)
(74) Representative: Grünecker Patent- und Rechtsanwälte PartG mbB
(86) International application number: PCT/JP2022/042980
(87) International publication number: WO 2023/090440

(57) **Abstract**

This image radiation device 10 comprises first and second reflective mirrors (30, 40) that sequentially reflect emitted light from an image generation unit (20) toward a windshield serving as an image display part. A reflective surface (30a) of the first reflective mirror (30) is a saddle-shaped curved surface in which a horizontal cross-sectional shape thereof is a convex curve and a vertical cross-sectional shape thereof is a concave curve.

## Description

### TECHNICAL FIELD

The present disclosure relates to an image radiation device.

### BACKGROUND ART

As an in-vehicle image radiation device, there is known an image radiation device that is disposed in an interior and projects a display image on an image display part such as a front window (that is, a windshield) or a transparent plate disposed inside the interior.

Patent Literature 1 describes an image radiation device including an image generating unit that generates a display image, and first and second reflection mirrors that sequentially reflect light emitted from the image generating unit toward an image display part.

Patent Literature 2 describes an image radiation device including an image generating unit that generates a display image, a reflection mirror that reflects light emitted from the image generating unit toward an image display part, and a housing that houses the reflection mirror.

### CITATION LIST

### PATENT LITERATURE

Patent Literature 1: JP2019-159283A
Patent Literature 2: WO2020/110580A1

### SUMMARY OF INVENTION

### TECHNICAL PROBLEM

In the image radiation device described in Patent Literature 1, a reflection surface of the first reflection mirror is formed in a planar shape, and therefore, when a reflection surface of the second reflection mirror has an outer shape other than a square shape, it is difficult to cause reflected light from the first reflection mirror to be efficiently incident on the reflection surface of the second reflection mirror.

The same applies to a case where a surface shape of the reflection surface of the first reflection mirror is formed of a convex curved surface or a concave curved surface instead of a flat surface.

Further, in the image radiation device, solar light that is incident on the interior through the front window or the like may be incident on an internal space of the housing and reach a peripheral region of the reflection surface of the reflection mirror. At the time of performing a surface treatment for forming the reflection surface of the reflection mirror, a vapor-deposited film or the like may adhere to the peripheral region of the reflection surface.

In such a case, the solar light reflected by the peripheral region of the reflection surface may become stray light (that is, light unintended in design) and reach the image display part, and accordingly, an unnecessary image other than the display image may be formed.

On the other hand, in a case where the image radiation device includes a frame member that covers the peripheral region of the reflection surface of the reflection mirror, it is possible to prevent occurrence of the stray light in advance. However, in this case, the cost of the image radiation device increases due to the increase in the number of components.

Further, in the image radiation device, it is preferable to adjust orientation of the reflection mirror so that the display image is projected at an appropriate position with respect to the image display part.

When a bracket that supports the reflection mirror in a rotatable manner is attached and the bracket is fixed to the housing, the orientation of the reflection mirror may be adjusted.

However, in such a configuration, it is necessary to newly provide a bracket, and therefore, the cost of the image radiation device increases due to the increase in the number of components.

These problems may also occur in an image radiation device other than an in-vehicle image radiation device.

An object of the present disclosure is to provide an image radiation device that projects a display image on an image display part by sequentially reflecting light emitted from an image generating unit by first and second reflection mirrors, in which reflected light from the first reflection mirror can be efficiently incident on a reflection surface of the second reflection mirror even when the reflection surface of the second reflection mirror has an outer shape other than a square shape.

An object of the present disclosure is to provide an image radiation device that projects a display image on an image display part, in which occurrence of stray light can be effectively suppressed with an inexpensive configuration.

An object of the present disclosure is to provide an image radiation device that projects a display image on an image display part, in which the display image can be projected at an appropriate position with an inexpensive configuration.

### SOLUTION TO PROBLEM

The present disclosure facilitates implementation of the above objects by devising a configuration of the first reflection mirror.

That is, an image radiation device according to an aspect of the present disclosure is an image radiation device configured to project a display image on an image display part, the image radiation device including: an image generating unit configured to generate the display image; and first and second reflection mirrors configured to sequentially reflect light emitted from the image generating unit toward the image display part, in which a reflection surface of the first reflection mirror is a saddle surface.

A specific application of the image radiation device is not particularly limited as long as the image radiation device is configured to display the display image on the image display part. The image radiation device is, for example, an in-vehicle head-up display.

A specific configuration of the image display part is not particularly limited as long as the image display part is configured to display the display image. The image display part is, for example, a front window of a vehicle or a transparent plate disposed inside an interior.

A specific curvature of the reflection surface of the first reflection mirror at each portion of the surface is not particularly limited as long as the reflection surface is a saddle surface.

A surface shape of a reflection surface of the second reflection mirror is not particularly limited.

Further, the present disclosure facilitates implementation of the above objects by devising a configuration of a housing.

That is, an image radiation device according to another aspect of the present disclosure is an image radiation device that projects a display image on an image display part, the image radiation device including: an image generating unit configured to generate the display image; a reflection mirror configured to reflect light emitted from the image generating unit toward the image display part; and a housing configured to house the reflection mirror, in which: the housing includes a first housing configured to support the reflection mirror and a second housing attached to the first housing; and the first housing or the second housing is formed with a light shielding piece configured to cover a peripheral region of a reflection surface of the reflection mirror.

A specific configuration of the reflection mirror is not particularly limited as long as the reflection mirror is configured to reflect light emitted from the image generating unit toward the image display part.

A specific shape of the light shielding piece is not particularly limited as long as the light shielding piece covers the peripheral region of the reflection surface of the reflection mirror. A specific range of the light shielding piece that covers the peripheral region of the reflection surface is not particularly limited.

Further, the present disclosure facilitates implementation of the above objects by further devising a configuration of a housing.

That is, an image radiation device according to another aspect of the present disclosure is an image radiation device configured to display a display image on an image display part, the image radiation device including: an image generating unit configured to generate the display image; a reflection mirror configured to reflect light emitted from the image generating unit toward the image display part; and a housing configured to house the reflection mirror, in which: the housing includes a first housing and a second housing attached to the first housing; a side end of a reflection surface of the reflection mirror is formed with a shaft extending in a direction away from the reflection surface; the first housing is formed with a placing portion on which the shaft is placed; and the second housing is formed with an abutting portion configured to abut against the shaft placed on the placing portion to position the reflection mirror.

The shaft may be formed on both side ends of the reflection surface, or may be formed on one side end.

A specific shape of the placing portion is not particularly limited as long as the placing portion has a shape on which the shaft may be mounted.

A specific shape of the abutting portion is not particularly limited as long as the abutting portion has a shape capable of positioning the reflection mirror by abutting against the shaft placed on the placing portion.

### ADVANTAGEOUS EFFECTS OF INVENTION

In the image radiation device according to an aspect of the present disclosure, the reflection surface of the first reflection mirror is a saddle surface.

Even when the reflection surface of the second reflection mirror has an outer shape other than a square shape, a sectional shape of the reflection surface of the first reflection mirror along a longitudinal direction of the reflection surface of the second reflection mirror is a convex curve, and a sectional shape along a direction orthogonal thereto is a concave curve. Accordingly, the reflected light from the first reflection mirror can be efficiently incident on the reflection surface of the second reflection mirror.

In this manner, according to the present disclosure, in an image radiation device that projects a display image on an image display part by sequentially reflecting light emitted from an image generating unit by first and second reflection mirrors, reflected light from the first reflection mirror can be efficiently incident on a reflection surface of the second reflection mirror even when the reflection surface of the second reflection mirror has an outer shape other than a square shape.

In an image radiation device according to another aspect of the present disclosure, a housing includes a first housing configured to support a reflection mirror and a second housing attached to the first housing, and the first housing or the second housing is formed with a light shielding piece configured to cover a peripheral region of a reflection surface of the reflection mirror.

That is, the second housing is attached to the first housing configured to support the reflection mirror. Accordingly, the housing may be manufactured without difficulty.

Further, the first housing or the second housing is formed with a light shielding piece configured to cover a peripheral region of a reflection surface of the reflection mirror. Accordingly, solar light incident on an internal space of the housing can be prevented in advance from reaching the peripheral region of the reflection surface by a light shielding effect of the light shielding piece. Further, it is possible to prevent in advance an unnecessary image other than the display image from being formed due to the solar light reflected by the peripheral region of the reflection surface reaching the image display part as stray light.

Moreover, it is possible to prevent in advance an unnecessary image from being formed without newly disposing a frame member or the like that covers the peripheral region of the reflection surface. Accordingly, the image radiation device can be made inexpensive.

In this manner, according to the present disclosure, it is possible to effectively suppress occurrence of stray light with an inexpensive configuration in an image radiation device that projects a display image on an image display part.

In an image radiation device according to another aspect of the present disclosure, a housing includes a first housing and a second housing attached to the first housing, a side end of a reflection surface of a reflection mirror is formed with a shaft extending in a direction away from the reflection surface, the first housing is formed with a placing portion on which the shaft is placed, and the second housing is formed with an abutting portion configured to abut against the shaft placed on the placing portion to position the reflection mirror.

That is, since the first housing and the second housing are assembled, the housing can be manufactured without difficulty.

Further, the shaft of the reflection mirror is placed on the placing portion of the first housing, and the second housing is attached to the first housing. Accordingly, positioning in a direction orthogonal to a rotation axis of the reflection mirror may be enabled without inhibiting rotation of the reflection mirror, in a state where the abutting portion abuts against the shaft placed on the placing portion.

Therefore, orientation of the reflection mirror may be adjusted without newly providing a bracket or the like that supports the reflection mirror in a rotatable manner. Accordingly, the display image may be projected at an appropriate position of the image display part.

Moreover, it is possible to project the display image at an appropriate position of the image display part by a simple operation of placing the reflection mirror on the first housing and attaching the second housing thereto.

In this manner, according to the present disclosure, in an image radiation device that projects a display image on an image display part, the display image can be projected at an appropriate position with an inexpensive configuration.

### BRIEF DESCRIPTION OF DRAWINGS

[FIG. 1] FIG. 1 is a side sectional view illustrating a state where an image radiation device according to an embodiment of the present disclosure is mounted on a vehicle.
[FIG. 2] FIG. 2 is a view taken along an arrow II in FIG. 1.
[FIG. 3] FIG. 3 is a detailed view of a portion III in FIG. 1.
[FIG. 4] FIG. 4 is a plan view illustrating the image radiation device in a state where a second housing is removed.
[FIG. 5] FIG. 5 is a sectional view illustrating the image radiation device taken along a line V-V in FIG. 4.
[FIG. 6] FIG. 6 is a perspective view illustrating a first reflection mirror of the image radiation device.
[FIG. 7A] FIG. 7A is a sectional view taken along a line VIIa-VIIa in FIG. 5.
[FIG. 7B] FIG. 7B is a sectional view taken along a line VIIb-VIIb in FIG. 5.
[FIG. 8A] FIG. 8A is a detailed view illustrating a detailed structure of the second housing in the portion III in FIG. 1.
[FIG. 8B] FIG. 8B is a sectional view taken along a line b-b in FIG. 8A.
[FIG. 9] FIG. 9 is a perspective view illustrating a state of assembly of the image radiation device.
[FIG. 10] FIG. 10 is a plan view illustrating an image radiation device according to a modification of the embodiment in a state where a second housing is removed.
[FIG. 11] FIG. 11 is a perspective view illustrating a first reflection mirror of the image radiation device according to the modification.
[FIG. 12] FIG. 12 is a plan view illustrating an image radiation device according to another modification of the embodiment in a state where a second housing is removed.

### DESCRIPTION OF EMBODIMENTS

Hereinafter, an embodiment of the present disclosure will be described with reference to the drawings.

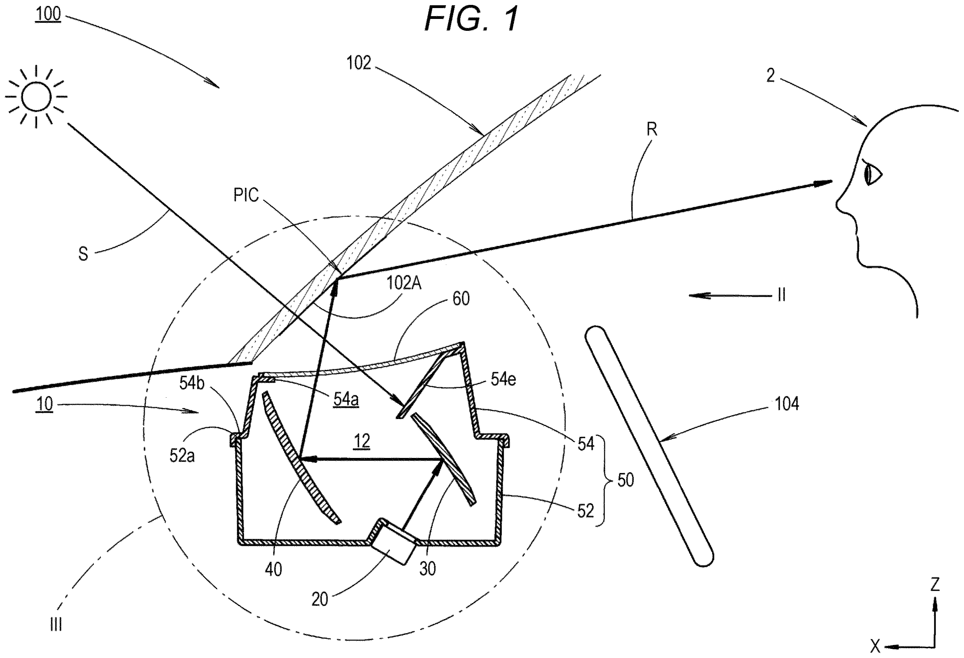

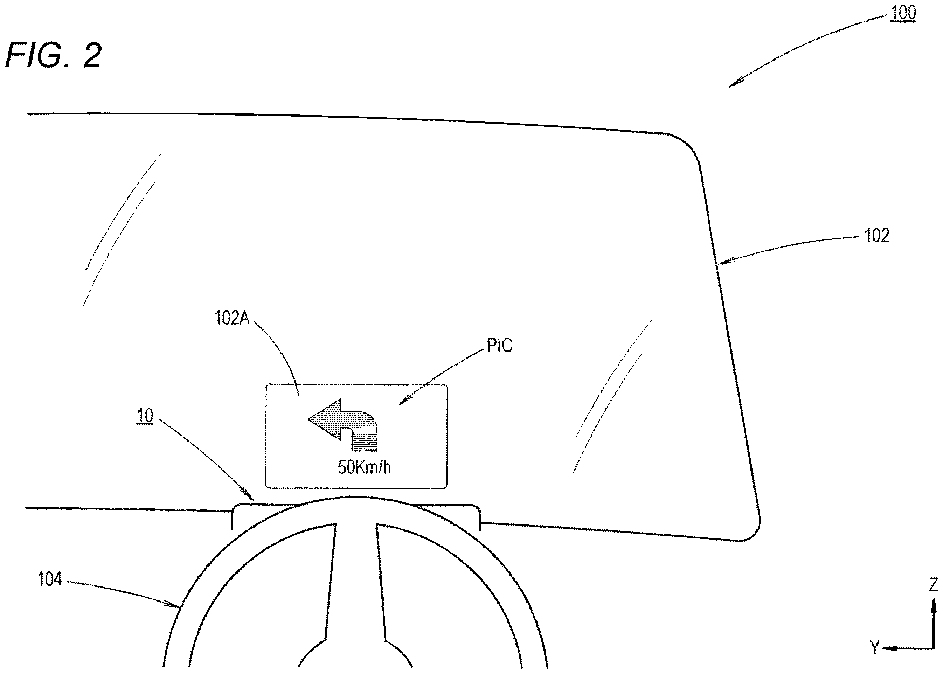

FIG. 1 is a side sectional view illustrating a state where an image radiation device 10 according to the present embodiment is mounted on a vehicle 100. FIG. 2 is a view taken along an arrow II in FIG. 1.

In the drawings, a direction indicated by X is the "front" of the image radiation device 10 (the "front" of the vehicle), a direction indicated by Y is a "left direction" orthogonal to the "front", and a direction indicated by Z is an "upper direction". The same applies to other drawings.

As illustrated in FIGS. 1 and 2, the image radiation device 10 according to the present embodiment is an in-vehicle head-up display. The image radiation device 10 projects a display image PIC as a virtual image in a display region 102A of a front window 102 serving as an image display part in a state where the image radiation device 10 is disposed in an interior of the vehicle 100. The front window 102 is an example of the image display part.

An optical path R illustrated in FIG. 1 is an optical path when a driver 2 visually recognizes the display image PIC projected in the display region 102A of the front window 102 by the image radiation device 10.

The display region 102A is located in a lower region of the front window 102 and a front region of a steering wheel 104. Accordingly, the driver 2 of the vehicle 100 may easily visually recognize the display image PIC projected in the display region 102A. FIG. 2 illustrates a state where a vehicle speed (50 Km/h) is displayed together with a leftward arrow as an example of the display image PIC.

The image radiation device 10 is disposed in front of the steering wheel 104 and in the vicinity of a lower portion of the front window 102.

As illustrated in FIG. 1, the image radiation device 10 includes an image generating unit 20 that generates an image serving as a source of the display image PIC, first and second reflection mirrors 30 and 40 that sequentially reflect light emitted from the image generating unit 20 toward the display region 102A of the front window 102, a housing 50 that houses the first and second reflection mirrors 30 and 40, and a translucent cover 60 attached to the housing 50.

The image generating unit 20 as well as the first and second reflection mirrors 30 and 40 are supported by the housing 50. Details will be described later.

The housing 50 includes a first housing 52 and a second housing 54. The first housing 52 is opened upward. The second housing 54 is attached to the first housing 52. Specifically, the second housing 54 includes an outer peripheral flange 54b, and is attached to the first housing 52 in a state where the outer peripheral flange 54b abuts against an upper end opening 52a of the first housing 52.

The first and second housings 52 and 54 are both made of a non-transparent resin molded product. The second housing 54 is formed with an opening 54a through which reflected light from the second reflection mirror 40 passes toward the display region 102A.

The translucent cover 60 is formed of a colorless transparent resin panel. The translucent cover 60 covers the opening 54a of the second housing 54 in a state of being curved downward and inclined slightly upward toward the rear. The translucent cover 60 allows the reflected light from the second reflection mirror 40 to be incident on the display region 102A, and secures dust-proofness of an internal space 12 of the housing 50.

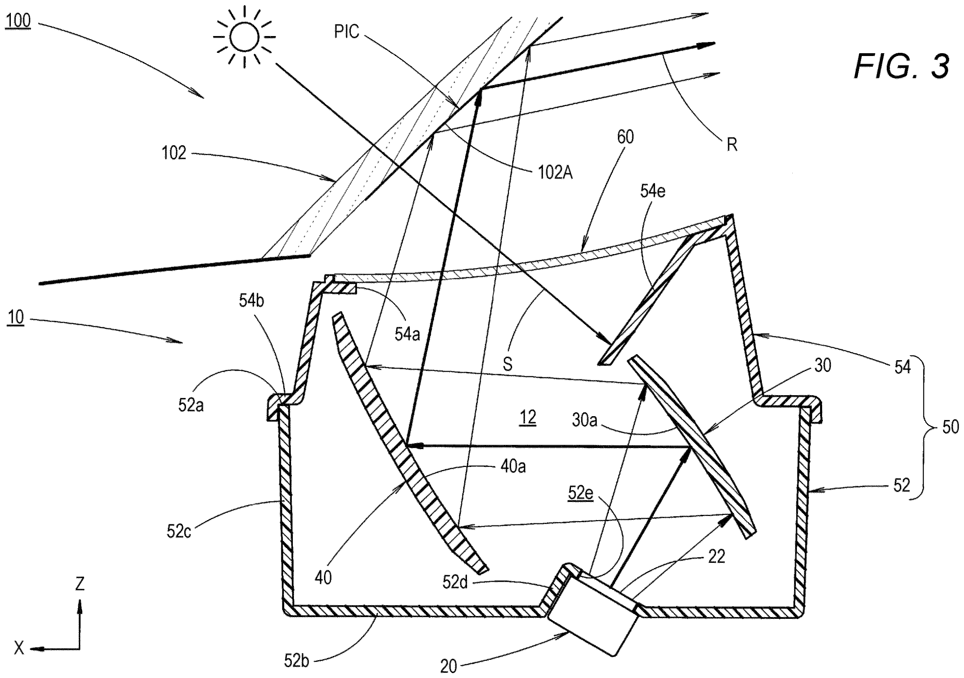

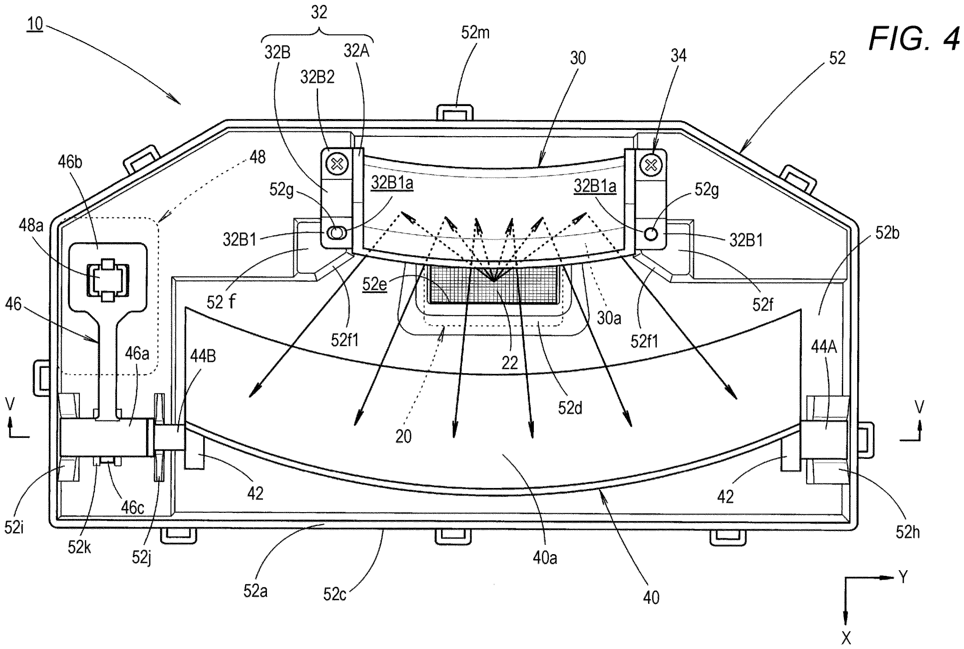

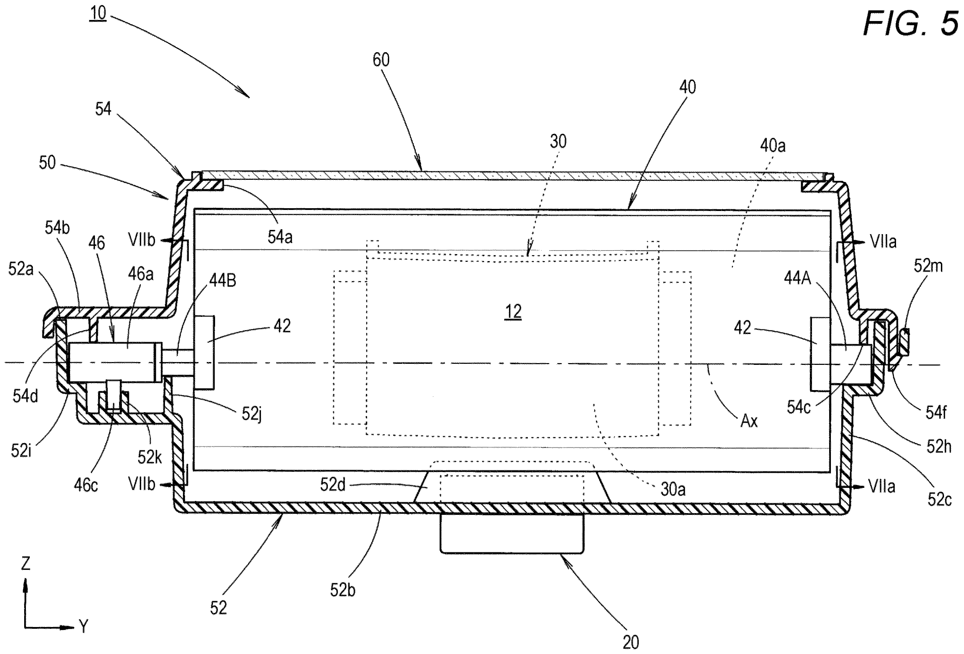

FIG. 3 is a detailed view of a portion III in FIG. 1. FIG. 4 is a plan view illustrating the image radiation device 10 in a state where the second housing 54 is removed. FIG. 5 is a sectional view illustrating the image radiation device 10 taken along a line V-V in FIG. 4.

As illustrated in FIGS. 3 to 5, a reflection surface 30a of the first reflection mirror 30 has a symmetrical shape, and a reflection surface 40a of the second reflection mirror 40 has a symmetrical shape. The image generating unit 20 is disposed at a center position of the first and second reflection mirrors 30 and 40 in a left-right direction.

The image generating unit 20 includes a liquid crystal panel 22 having a rectangular shape. The image generating unit 20 is supported by a lower wall 52b of the first housing 52 in a state where a longitudinal direction of the liquid crystal panel 22 extends in the left-right direction (that is, a vehicle width direction) and the liquid crystal panel 22 is oriented obliquely upward and rearward.

The image generating unit 20 generates an image serving as a source of the display image PIC on the liquid crystal panel 22 by irradiating the liquid crystal panel 22 with backlight from a back surface side of the liquid crystal panel 22.

The lower wall 52b of the first housing 52 is formed with a unit mounting portion 52d for mounting the image generating unit 20. The unit mounting portion 52d is formed with an opening 52e which is rectangular and is slightly larger than an outer shape of the liquid crystal panel 22.

The image generating unit 20 is fixed to the lower wall 52b of the first housing 52 by screwing or the like in a state where the liquid crystal panel 22 is fitted into the opening 52e of the unit mounting portion 52d.

The first reflection mirror 30 is disposed obliquely above and behind the image generating unit 20, and reflects irradiation light from the image generating unit 20 to the front.

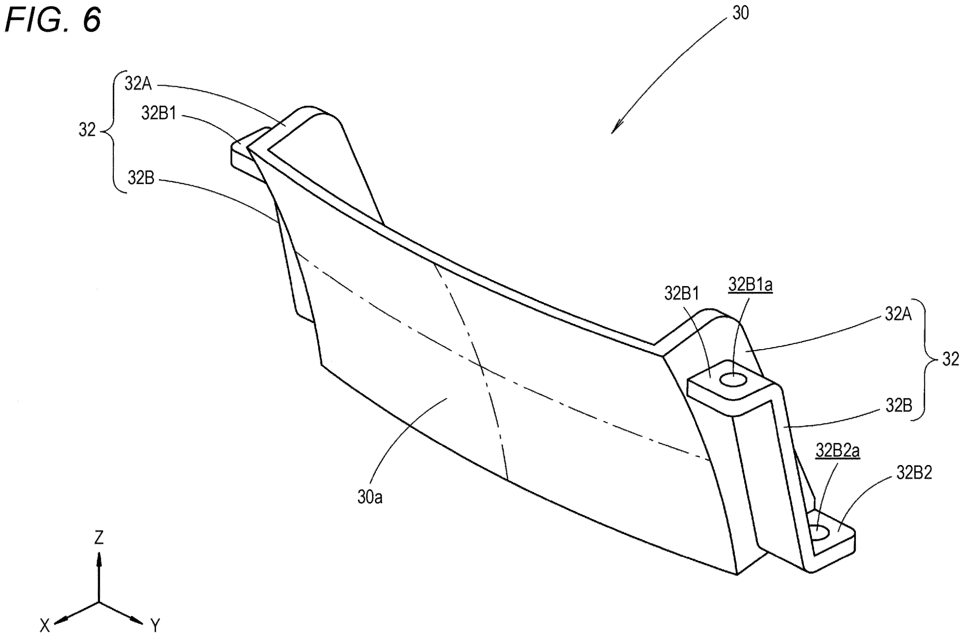

FIG. 6 is a perspective view illustrating the first reflection mirror 30.

As illustrated in FIG. 6, the first reflection mirror 30 is a saddle-shaped reflection mirror. The reflection surface 30a of the first reflection mirror 30 is a saddle surface. The reflection surface 30a of the first reflection mirror 30 has a substantially rectangular shape extending in the left-right direction (that is, a direction of an image to be visually recognized by the driver 2) in a front view of the vehicle.

Specifically, as indicated by a one-dot chain line in FIG. 6, a horizontal sectional shape (that is, a sectional shape along a first direction parallel to a long side of a rectangle) of the reflection surface 30a of the first reflection mirror 30 is constituted by a convex curve (specifically, a substantially arc-shaped convex curve), and a vertical sectional shape (that is, a sectional shape along a second direction parallel to a short side of the rectangle) of the reflection surface 30a of the first reflection mirror 30 is constituted by a concave curve (specifically, a substantially arc-shaped concave curve). In the present embodiment, such a configuration is called saddle-shaped.

Flanges 32 are formed on both left and right side ends of the reflection surface 30a of the first reflection mirror 30. As illustrated in FIG. 4, the first reflection mirror 30 is fixed to the first housing 52 via the pair of left and right flanges 32.

Specifically, each of the flanges 32 includes a side wall 32A extending rearward along a vertical plane from a side end of the reflection surface 30a, and a step-shaped portion 32B extending laterally from an outer side surface of the side wall 32A. The step-shaped portion 32B includes an upper flat portion 32B1 and a lower flat portion 32B2. The upper flat portion 32B1 and the lower flat portion 32B2 are connected to each other via an inclined surface portion.

The first reflection mirror 30 is fixed to the first housing 52 by screw fastening at the lower flat portion 32B2 in a state of being positioned at the upper flat portion 32B1 of the step-shaped portion 32B of each of the pair of left and right flanges 32.

The lower wall 52b of the first housing 52 is formed with a pair of left and right columnar projection portions 52f that support the first reflection mirror 30. Each of the columnar projection portions 52f protrudes upward from the lower wall 52b of the first housing 52 in a substantially pyramidal shape. An upper end surface of the columnar projection portion 52f is formed in a horizontal plane shape, and a pin 52g protruding upward is formed on the upper end surface.

A pin insertion hole 32B1a through which the pin 52g is inserted is formed in the upper flat portion 32B1 of the step-shaped portion 32B on each of the flanges 32 of the first reflection mirror 30. One of the pair of left and right pin insertion holes 32B1a (specifically, the left pin insertion hole 32B1a) is formed in a circular shape having substantially the same diameter as the pin 52g, and the other is formed in an ellipse shape having substantially the same front-rear width as the pin 52g and extending in the left-right direction.

A screw insertion hole 32B2a (see FIG. 6) through which the screw 34 is fastened to the lower wall 52b of the first housing 52 is formed in the lower flat portion 32B2 of the step-shaped portion 32B of each of the flanges 32.

The screws 34 are fastened to a pair of left and right screw holes (not illustrated) formed in the lower wall 52b of the first housing 52 via the pair of left and right screw insertion holes 32B2a in a state where the pair of left and right pins 52g are inserted into the pair of left and right pin insertion holes 32B1a and the pair of left and right upper flat portions 32B1 are pressed against the upper end surfaces of the pair of left and right columnar projection portions 52f. Accordingly, the first reflection mirror 30 is fixed in a state of being positioned with respect to the first housing 52.

The pair of left and right columnar projection portions 52f each have a peripheral surface shape that does not block the reflected light from the first reflection mirror 30 toward the second reflection mirror 40. Specifically, in each of the pair of left and right columnar projection portions 52f, a corner portion on an inner side of a front surface on a peripheral surface of a quadrangular pyramid is chamfered. Accordingly, an inclined surface 52f1 that spreads to both the left and right sides toward the front is formed. By forming the inclined surfaces 52f1 at the columnar projection portions 52f, the reflected light from the first reflection mirror 30 toward the second reflection mirror 40 is not blocked by the columnar projection portions 52f.

By forming the pair of left and right columnar projection portions 52f that support the first reflection mirror 30 in the first housing 52, the present embodiment prevents in advance the flanges 32 of the first reflection mirror 30 from being exposed to the light emitted from the image generating unit 20 or the solar light S, thereby preventing occurrence of stray light.

As illustrated in FIGS. 3 to 5, the second reflection mirror 40 is disposed in front of the first reflection mirror 30. The second reflection mirror 40 reflects upward the irradiation light from the image generating unit 20 reflected by the first reflection mirror 30.

The second reflection mirror 40 is a concave mirror. A surface shape of the reflection surface 40a of the second reflection mirror 40 is a substantially spherical concave curved surface. The reflection surface 40a of the second reflection mirror 40 has a rectangular shape extending in the left-right direction in the front view of the vehicle. The reflection surface 40a of the second reflection mirror 40 is larger than the reflection surface 30a of the first reflection mirror 30, and is formed with a larger aspect ratio than the reflection surface 30a of the first reflection mirror 30. Specifically, the reflection surface 40a of the second reflection mirror 40 has an up-down width of about 1 time to 1.5 times that of the reflection surface 30a of the first reflection mirror 30, and has a left-right width of about 2 times to 3 times that of the reflection surface 30a of the first reflection mirror 30.

In this manner, the reflection surface 40a of the second reflection mirror 40 is formed with an aspect ratio larger than that of the reflection surface 30a of the first reflection mirror 30 in a state of being largely curved in the left-right direction (that is, the direction of the image to be visually recognized by the driver 2). The first reflection mirror 30 is a saddle-shaped reflection mirror. Therefore, in the reflected light from the reflection surface 30a of the first reflection mirror 30, spread in the up-down direction is small and spread in the left-right direction is large. The reflected light from the reflection surface 30a is accordingly efficiently incident on the reflection surface 40a of the second reflection mirror 40.

As illustrated in FIGS. 4 and 5, the second reflection mirror 40 is supported by the first housing 52 in a rotatable manner about an axis Ax extending in the left-right direction in the vicinity of the front of the second reflection mirror 40. Accordingly, the second reflection mirror 40 may perform an angle adjustment in which the reflected light from the first reflection mirror 30 is accurately incident on the display region 102A of the front window 102.

A pair of left and right brackets 42 extending forward along a vertical plane are formed on both left and right side ends on a back surface side of the reflection surface 40a of the second reflection mirror 40. The pair of left and right brackets 42 are formed with first and second shafts 44A and 44B extending in both left and right directions (that is, a direction away from the reflection surface 40a) on the axis Ax, respectively.

Each of the first and second shafts 44A and 44B is formed in a columnar shape. An outer diameter of the second shaft 44B located on the right side is smaller than that of the first shaft 44A located on the left side. A tip end of the second shaft 44B is formed with the same outer diameter as the first shaft 44A.

A tip surface of the second shaft 44B is fixed to a base end 46a of a lever member 46 extending rearward. The base end 46a of the lever member 46 extends in a columnar shape coaxially with the second shaft 44B. An outer diameter of the base end 46a is the same as that of the tip end of the second shaft 44B.

A tip end 46b of the lever member 46 is coupled to an output shaft 48a of an actuator 48 that rotates the second reflection mirror 40 around the axis Ax.

The actuator 48 is fixed to the lower wall 52b below the first housing 52. The output shaft 48a of the actuator 48 extends upward to the internal space 12 of the housing 50, and may reciprocate in the up-down direction.

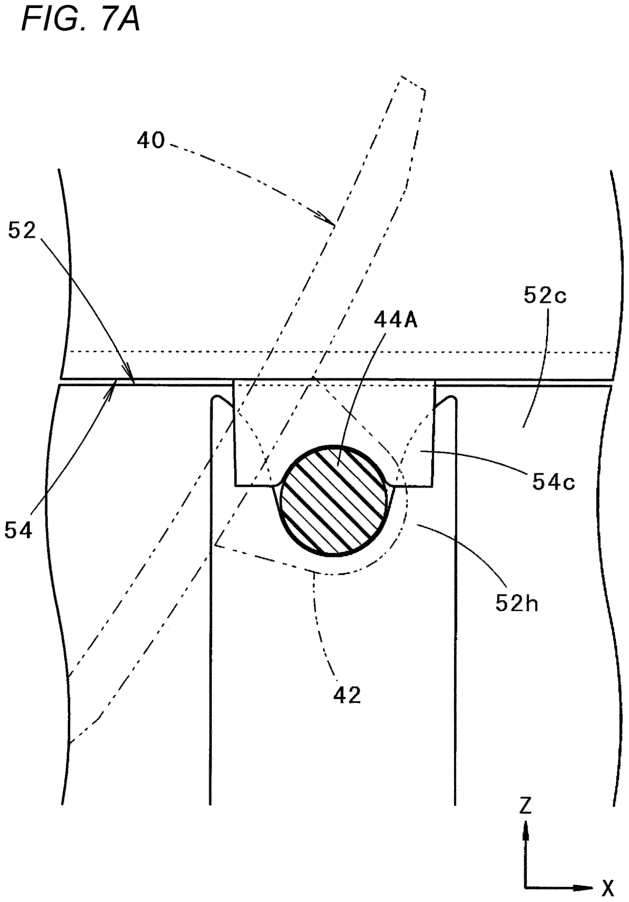

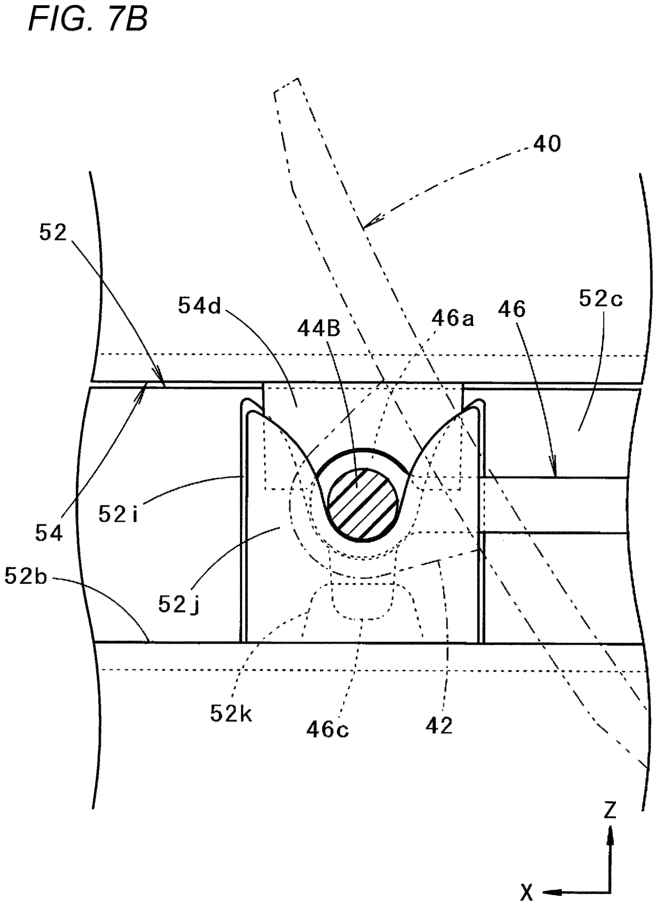

FIG. 7A is a sectional view taken along a line VIIa-VIIa in FIG. 5. FIG. 7B is a sectional view taken along a line VIIb-VIIb in FIG. 5.

As also illustrated in FIGS. 7A and 7B, a peripheral wall 52c of the first housing 52 is formed with a placing portion 52h on which the first shaft 44A is mounted and a placing portion 52i on which the base end 46a of the lever member 46 is mounted.

The placing portion 52h is formed on an inner surface of a left region of the peripheral wall 52c of the first housing 52. The placing portion 52i is formed on an inner surface of a right region of the peripheral wall 52c of the first housing 52. An upper surface of each of the placing portions 52h and 52i is formed in a substantially U-shape. A lower end of the U-shape is a semi-cylindrical surface having substantially the same inner diameter as the outer diameter of each of the first shaft 44A and the base end 46a of the lever member 46.

In the first housing 52, a placing portion 52j on which the second shaft 44B is placed is formed on the left side (that is, a first shaft 44A side) of the lever member 46. The placing portion 52j is formed as a rib protruding upward from the lower wall 52b of the first housing 52. An upper surface of the placing portion 52j is formed in a substantially U-shape. A lower end of the U-shape is a semi-cylindrical surface having an inner diameter substantially equal to an outer diameter of the second shaft 44B.

The second housing 54 is formed with an abutting portion 54c that abuts against the first shaft 44A placed on the placing portion 52h of the first housing 52 to position the second reflection mirror 40, and an abutting portion 54d that abuts against the base end 46a of the lever member 46 placed on the placing portion 52i of the first housing 52 to position the second reflection mirror 40.

Each of the abutting portions 54c and 54d is formed as a rib protruding downward from the outer peripheral flange 54b of the second housing 54. A lower end surface of the rib is formed with a semi-cylindrical concavity having an inner diameter substantially equal to an outer diameter of each of the first shaft 44A and the base end 46a of the lever member 46.

The base end 46a of the lever member 46 is formed with a tab 46c protruding downward. The lower wall 52b of the first housing 52 is formed with a pair of left and right clamping portions 52k protruding upward. The tab 46c extends along the vertical plane extending in the front-rear direction. The pair of left and right clamping portions 52k are positioned on left and right sides of the tab 46c. When the tab 46c and the pair of right and left clamping portions 52k are engaged with each other, the second reflection mirror 40 is positioned with respect to the first housing 52 in the left-right direction.

As illustrated in FIGS. 3 to 5, other portions of the lower wall 52b of the first housing 52 is formed at a position one step higher than a portion where the unit mounting portion 52d is formed and a portion located below the reflection surfaces 30a and 40a of the first and second reflection mirrors 30 and 40.

As illustrated in FIG. 3, the second housing 54 is formed with a light shielding piece 54e that covers a peripheral region of the reflection surface 30a of the first reflection mirror 30. The light shielding piece 54e extends obliquely downward and forward from a rear end edge of the opening 54a of the second housing 54 so as to define a plate shape.

In the image radiation device 10, the solar light S incident on the interior through the front window 102 may be incident on the internal space 12 of the housing 50 through the translucent cover 60. The solar light S is prevented in advance from reaching the peripheral region of the reflection surface 30a of the first reflection mirror 30 by the light shielding effect of the light shielding piece 54e.

Even when a vapor-deposited film or the like adheres to the peripheral region of the reflection surface 30a at the time of performing the surface treatment on the reflection surface 30a of the first reflection mirror 30, the present embodiment prevents in advance the solar light S that reaches the peripheral region from being reflected by the vapor-deposited film or the like and becoming stray light.

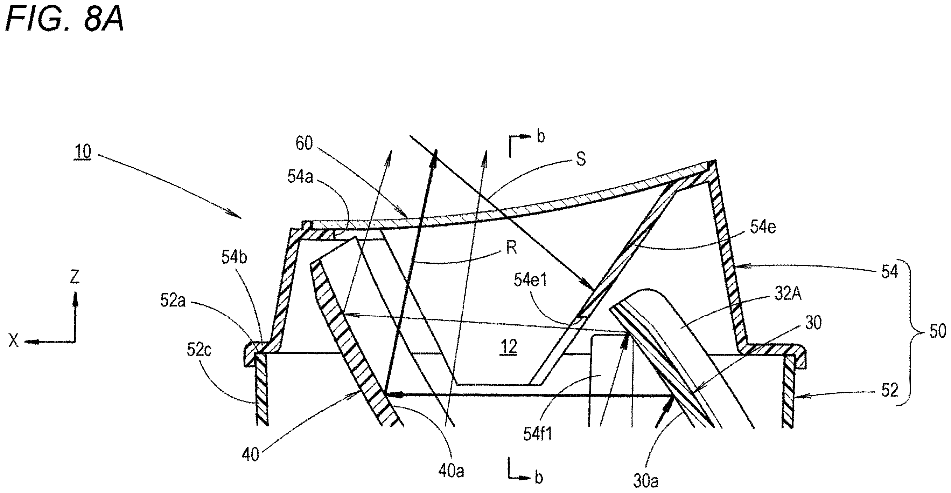

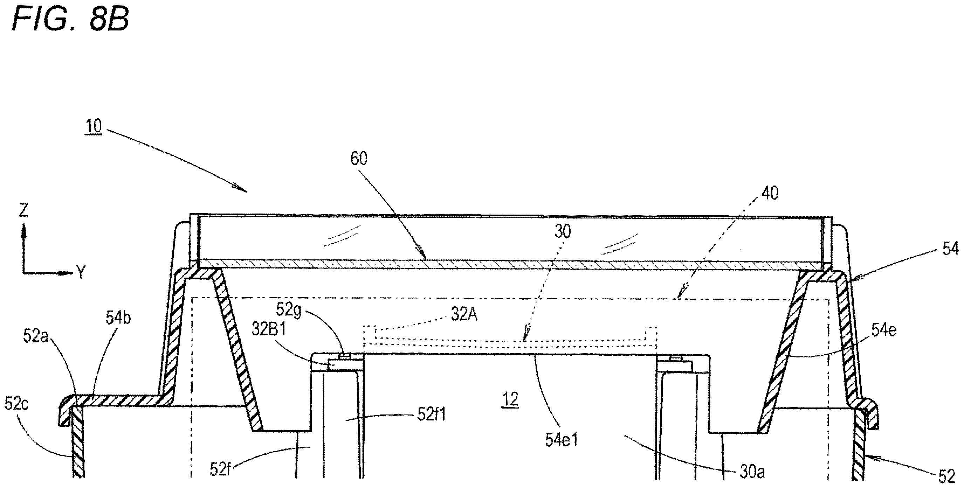

FIG. 8A is a detailed view illustrating a detailed structure of the second housing 54 in the portion III of FIG. 1. In the configuration illustrated in FIG. 8A, the same components as those illustrated in FIG. 3 are denoted by the same reference numerals, and the description thereof is omitted. FIG. 8B is a sectional view taken along a line b-b in FIG. 8A.

As illustrated in FIGS. 8A and 8B, a tip surface of the light shielding piece 54e extends to a position below an upper end edge of the reflection surface 30a of the first reflection mirror 30. Atip end of the light shielding piece 54e is formed with a cut portion 54e1 that allows the reflected light from the first reflection mirror 30 to be incident on the second reflection mirror 40.

The cut portion 54e1 is formed as a horizontally elongated rectangular concavity in the front view of the vehicle. An upper end edge of the cut portion 54e1 is located slightly below the upper end edge of the reflection surface 30a of the first reflection mirror 30. Both side end edges of the cut portion 54e1 are formed in a state of being slightly separated from left and right end edges of the reflection surface 30a of the first reflection mirror 30 to both left and right sides. That is, the upper end edge and the left and right end edges of the cut portion 54e1 are located on an outer peripheral side of an optical effective range of the reflection surface 30a of the first reflection mirror 30.

The light shielding piece 54e is folded in a plate shape to portions corresponding to both left and right sides of the opening 54a of the second housing 54. The light shielding piece 54e extends obliquely downward toward an inner peripheral side on both left and right sides of the opening 54a. A front end edge of the light shielding piece 54e is located behind the second reflection mirror 40. In this manner, the present embodiment prevents a mold from being complicated in advance by forming the light shielding piece 54e in a reasonable shape in relation to a removal direction of the mold.

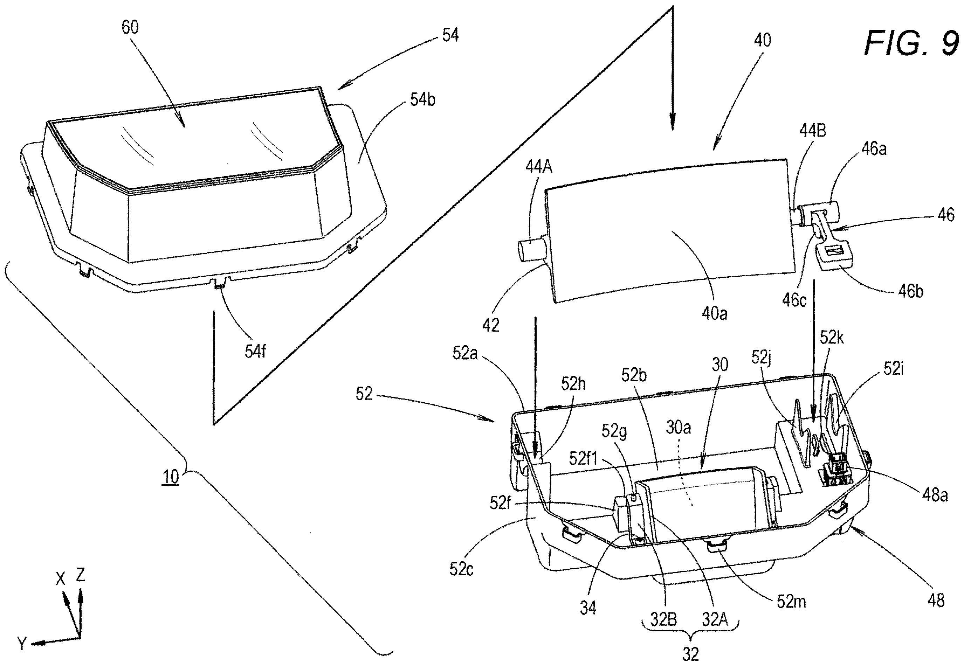

FIG. 9 is a perspective view illustrating a state of assembly of the image radiation device 10.

As illustrated in FIG. 9, the second reflection mirror 40 and the second housing 54 are assembled by sequentially attaching the second reflection mirror 40 and the second housing 54 to the first housing 52 from an upper side of the first housing 52.

FIG. 9 illustrates a state where the first reflection mirror 30 and the actuator 48 is attached to the first housing 52 in advance and the translucent cover 60 is attached to the second reflection mirror 40 in advance.

The second reflection mirror 40 is mounted on the first housing 52 by placing the first shaft 44A of the second reflection mirror 40 on the placing portion 52h of the first housing 52 and placing the base end 46a of the lever member 46 and the second shaft 44B of the second reflection mirror 40 on the placing portions 52i and 52j of the first housing 52, respectively.

At this time, the tab 46c formed on the base end 46a of the lever member 46 is inserted between the pair of left and right clamping portions 52k of the first housing 52, and the tip end 46b of the lever member 46 is coupled to the output shaft 48a of the actuator 48.

The second housing 54 is attached to the first housing 52 by lance engagement at a plurality of portions. Lances 54f facing downward are formed at a plurality of portions of the outer peripheral flange 54b of the second housing 54. The first housing 52 is formed with engagement holes 52m that are opened in the up-down direction at positions corresponding to the plurality of lances 54f. When the outer peripheral flange 54b of the second housing 54 abuts against the upper end opening 52a of the first housing 52, the lances 54f are inserted into and engaged with the respective engagement holes 52m. Accordingly, the second housing 54 is fixed to the first housing 52.

Next, operations of the present embodiment will be described.

The image radiation device 10 according to the present embodiment projects the display image PIC on the front window 102 serving as the image display part by sequentially reflecting the light emitted from the image generating unit 20 by the first and second reflection mirrors 30 and 40. Since the reflection surface 30a of the first reflection mirror 30 is a saddle surface, the present embodiment can exert the following operations and effects.

The reflection surface 40a of the second reflection mirror 40 has a horizontally elongated outer shape (that is, an outer shape other than a square shape). The horizontal sectional shape (that is, the sectional shape along the longitudinal direction) of the reflection surface 30a of the first reflection mirror 30 is constituted by a convex curve, and the vertical sectional shape (that is, the sectional shape along the direction orthogonal to the longitudinal direction) of the reflection surface 30a of the first reflection mirror 30 is constituted by a concave curve. Therefore, the reflected light from the first reflection mirror 30 can be efficiently incident on the reflection surface 40a of the second reflection mirror 40.

Specifically, the reflection surface 40a of the second reflection mirror 40 has a larger aspect ratio than the reflection surface 30a of the first reflection mirror 30. Since the first reflection mirror 30 is a saddle-shaped reflection mirror, the reflected light from the reflection surface 30a of the first reflection mirror 30 has small spread in the up-down direction and large spread in the left-right direction. The reflected light from the reflection surface 30a is accordingly efficiently incident on the reflection surface 40a of the second reflection mirror 40.

In this manner, according to the present embodiment, in the image radiation device 10 that projects the display image PIC on the front window 102 by sequentially reflecting the light emitted from the image generating unit 20 by the first and second reflection mirrors 30 and 40, the reflected light from the first reflection mirror 30 can be efficiently incident on the reflection surface 40a of the second reflection mirror 40 even when the reflection surface 40a of the second reflection mirror 40 has an outer shape other than a square shape.

In the present embodiment, since the reflection surface 40a of the second reflection mirror 40 is a concave curved surface, the display image PIC can be projected on the front window 102 in an enlarged state by reflecting the reflected light from the first reflection mirror 30 by the second reflection mirror 40. Moreover, the front-rear width of the image radiation device 10 can be reduced by reducing an interval between the first reflection mirror 30 and the second reflection mirror 40.

The image generating unit 20 according to the present embodiment generates the display image PIC as an image having a horizontally elongated rectangular shape. The horizontal sectional shape of the reflection surface 30a of the first reflection mirror 30 is constituted by a convex curve, and the vertical sectional shape of the reflection surface 30a of the first reflection mirror 30 is constituted by a concave curve. Therefore, the reflected light from the first reflection mirror 30 can be efficiently incident on the reflection surface 40a of the second reflection mirror 40.

Further, the image radiation device 10 according to the present embodiment includes the housing 50 that houses the first and second reflection mirrors 30 and 40. The pair of flanges 32 are formed on both side ends of the reflection surface 30a of the first reflection mirror 30. Since the first reflection mirror 30 is fixed to the housing 50 via the pair of left and right flanges 32, the first reflection mirror 30 can be disposed with high accuracy, and accordingly, the reflection of the light emitted from the image generating unit 20 can be reflected with high accuracy.

In the above embodiment, the convex curve constituting the horizontal sectional shape and the concave curve constituting the vertical sectional shape of the reflection surface 30a of the first reflection mirror 30 are both described as being formed in a substantially arc shape. Each of the convex curve and the concave curve may be formed so that a curvature thereof gradually changes.

In the above embodiment, the reflection surface 40a of the second reflection mirror 40 is described as having a horizontally elongated rectangular shape. However, the reflection surface 40a may have a vertically elongated rectangular shape or an outer shape other than the rectangular shape.

In the above embodiment, the reflection surface 40a of the second reflection mirror 40 is described as a concave curved surface. However, the reflection surface 40a may be a flat surface, a convex curved surface, or a saddle surface instead of the concave curved surface.

In the above embodiment, the image display part is described as the front window 102. However, the image display part may be a transparent plate or the like disposed inside the interior of the front window 102.

In the above embodiment, the image radiation device 10 is described as an in-vehicle head-up display. However, the image radiation device 10 may be used for other applications.

Next, another operation of the present embodiment will be described.

The image radiation device 10 according to the present embodiment includes the image generating unit 20 that generates the display image PIC, the first and second reflection mirrors 30 and 40 that sequentially reflect light emitted from the image generating unit 20 toward the front window 102 serving as the image display part, and the housing 50 that houses the first and second reflection mirrors 30 and 40. The housing 50 includes the first housing 52 and the second housing 54. The second housing 54 is attached to the first housing 52 that supports the first and second reflection mirrors 30 and 40. The second housing 54 is formed with the light shielding piece 54e that covers the peripheral region of the reflection surface 30a of the first reflection mirror 30, and therefore, the present embodiment can exert the following operation and effect.

Since the second housing 54 is attached to the first housing 52 that supports the first and second reflection mirrors 30 and 40, the housing 50 can be manufactured without difficulty.

The second housing 54 is formed with the light shielding piece 54e that covers the peripheral region of the reflection surface 30a of the first reflection mirror 30. Therefore, the solar light S incident on the internal space 12 of the housing 50 can be prevented in advance from reaching the peripheral region of the reflection surface 30a by the light shielding effect of the light shielding piece 54e. Therefore, it is possible to prevent in advance an unnecessary image other than the display image PIC from being formed when the solar light S reflected by the peripheral region of the reflection surface 30a becomes stray light and reaches the front window 102.

Further, it is possible to prevent an unnecessary image from being formed without newly providing a frame member or the like that covers the peripheral region of the reflection surface 30a of the first reflection mirror 30, and accordingly, to make the image radiation device 10 inexpensive.

In this manner, according to the present embodiment, it is possible to effectively suppress occurrence of stray light with the inexpensive configuration in the image radiation device 10 that projects the display image PIC on the front window 102 serving as the image display part.

In the image radiation device 10 according to the present embodiment, the second housing 54 is formed with the opening 54a through which the reflected light from the second reflection mirror 40 toward the front window 102 passes. Since the light shielding piece 54e extends from the peripheral region of the opening 54a to define a plate shape, it is possible to effectively suppress the solar light S from reaching the peripheral region of the reflection surface 30a of the first reflection mirror 30 while forming the second housing 54 into a reasonable shape in manufacturing (specifically, a reasonable shape in relation to the removal direction of the mold).

Since the tip end of the light shielding piece 54e is formed with the cut portion 54f1 that allows the reflected light from the first reflection mirror 30 to be incident on the second reflection mirror 40, occurrence of stray light can be effectively suppressed, and the reflected light from the first reflection mirror 30 can be effectively used.

In the image radiation device 10 according to the present embodiment, the pair of left and right columnar projection portions 52f that support the first reflection mirror 30 are formed in the first housing 52. Each of the columnar projection portions 52f has a peripheral surface shape that does not block the reflected light from the first reflection mirror 30 toward the second reflection mirror 40. Therefore, the reflected light from the first reflection mirror 30 can be effectively used. In each of the pair of left and right columnar projection portions 52f, a corner portion on an inner side of a front surface on a peripheral surface of a quadrangular pyramid is chamfered. Accordingly, the inclined surface 52f1 spreading to both the left and right sides toward the front is formed, and therefore, it is possible to reliably support the first reflection mirror 30 and prevent the reflected light from the first reflection mirror 30 from being blocked.

In the present embodiment, the pair of left and right columnar projection portions 52f that support the first reflection mirror 30 are formed in the first housing 52. Therefore, it is possible to prevent in advance the flange 32 of the first reflection mirror 30 from being exposed to the light emitted from the image generating unit 20 or the solar light S, thereby preventing occurrence of stray light.

In the above embodiment, the reflection surfaces 30a and 40a of the first and second reflection mirrors 30 and 40 are described as having a horizontally elongated rectangular shape. However, the reflection surfaces 30a and 40a may have other outer shapes from the viewpoint of effectively suppressing occurrence of stray light with an inexpensive configuration.

In the above embodiment, the reflection surface 30a of the first reflection mirror 30 is described as a saddle surface and the reflection surface 40a of the second reflection mirror 40 is described as a concave curved surface. However, the reflection surface 30a and the reflection surface 40a may have other surface shapes (for example, a planar shape) from the viewpoint of effectively suppressing the occurrence of the stray light with an inexpensive configuration.

In the above embodiment, the image radiation device 10 is described as including the first and second reflection mirrors 30 and 40. However, the image radiation device 10 may include a single reflection mirror from the viewpoint of effectively suppressing the occurrence of the stray light with an inexpensive configuration. In this case, the second housing 54 is also formed with a light shielding piece that covers a peripheral region of a reflection surface of the reflection mirror, and therefore, it is possible to exert substantially the same operation and effect as those of the above embodiment.

Next, still another operation of the present embodiment will be described.

The image radiation device 10 according to the present embodiment includes the image generating unit 20 that generates the display image PIC, the first and second reflection mirrors 30 and 40 that sequentially reflect light emitted from the image generating unit 20 toward the front window 102 serving as the image display part, and the housing 50 that houses the first and second reflection mirrors 30 and 40. The first and second shafts 44A and 44B are disposed on the same axis Ax at both side ends of the reflection surface 40a of the second reflection mirror 40. Therefore, the present embodiment can adjust orientation of the second reflection mirror 40 by rotating the second reflection mirror 40 around the axis Ax.

Since the housing 50 includes the first housing 52 that supports the first and second reflection mirrors 30 and 40 and the second housing 54 attached to the first housing 52, the housing 50 can be manufactured without difficulty.

The first housing 52 is formed with the placing portions 52h and 52j on which the first and second shafts 44A and 44B are placed, respectively. The second housing 54 is formed with the abutting portions 54c and 54d that abut against the first and second shafts 44A and 44B placed on the placing portions 52h and 52j, respectively, to position the second reflection mirror 40. Therefore, the present embodiment can exert the following operation and effect.

When the second housing 54 is attached to the first housing 52, the abutting portion 54c abuts against the first shaft 44A of the second reflection mirror 40, and the abutting portion 54d abuts against (the base end 46a of the lever member 46 fixed to) the second shaft 44B of the second reflection mirror 40. Accordingly, in the present embodiment, positioning can be performed in the up-down direction and the front-rear direction of the second reflection mirror 40 (that is, the direction orthogonal to the axis Ax) without inhibiting the rotation of the second reflection mirror 40.

Therefore, orientation of the second reflection mirror 40 may be adjusted without newly providing a bracket or the like that supports the second reflection mirror 40 in a rotatable manner. Accordingly, the display image PIC may be projected at an appropriate position of the front window 102.

Moreover, the display image PIC may be projected at an appropriate position on the front window 102 by a simple operation of placing the second reflection mirror 40 on the first housing 52 from above and attaching the second housing 54 thereto.

In this manner, according to the present embodiment, the display image PIC can be projected at an appropriate position with an inexpensive configuration in the image radiation device 10 that projects the display image PIC on the front window 102 serving as the image display part.

In the present embodiment, the lever member 46 extending in the direction intersecting the axis Ax is fixed to the second shaft 44B of the second reflection mirror 40, and the lever member 46 is coupled to the actuator 48 that rotates the second reflection mirror 40 around the axis Ax. Therefore, the second reflection mirror 40 may be rotated by necessary minimum members.

In the present embodiment, the placing portion 52h on which the first shaft 44A of the second reflection mirror 40 is placed is formed on the inner surface of the peripheral wall 52c of the first housing 52. The placing portion 52i (second placing portion) on which the lever member 46 is placed is formed on the inner surface on the opposite side of the peripheral wall 52c of the first housing 52, and therefore, sufficient support rigidity for the second reflection mirror 40 can be ensured.

In the present embodiment, the placing portion 52j on which the second shaft 44B of the second reflection mirror 40 is placed is formed at a position on a first shaft 44A side relative to the lever member 46. The second reflection mirror 40 can be stably rotated by supporting both left and right sides of the lever member 46 by the first housing 52.

In the present embodiment, the abutting portions 54c and 54d of the second housing 54 are formed as ribs each having an arc-shaped concavity. The second reflection mirror 40 can be stably rotated, and the orientation of the second reflection mirror 40 may be easily adjusted.

In the above embodiment, portions abutting against the first and second shafts 44A and 44B are described as having a semicircular arc sectional shape as the configuration of the placing portions 52h and 52j and the abutting portions 54c and 54d. However, the portions abutting against the first and second shafts 44A and 44B may have a trapezoidal sectional shape or the like instead of the semicircular sectional shape. Any of the placing portions 52h and 52j and the abutting portions 54c and 54d may be formed in a planar shape.

In the above embodiment, the image generating unit 20 is described as being disposed at a center position in the left-right direction of the reflection surfaces 30a and 40a of the first and second reflection mirrors 30 and 40, but may be disposed at a position shifted from the center position in the left-right direction.

In the above embodiment, the first and second reflection mirrors 30 and 40 are described as being included, but a single reflection mirror may be included, and it is possible to exert substantially the same operation and effect as those of the above embodiment even when such a configuration is adopted.

Next, modifications of the above embodiment will be described.

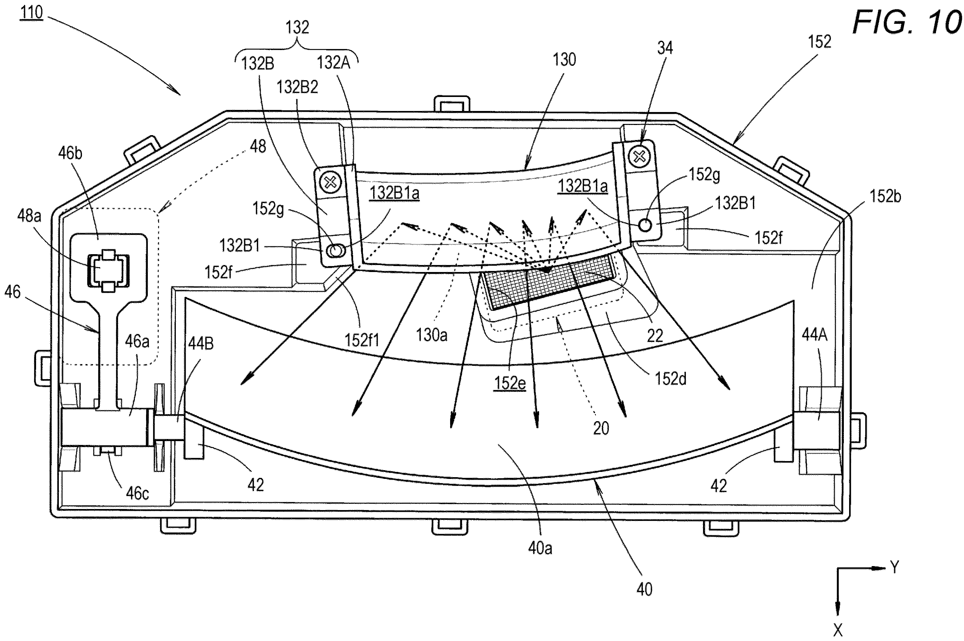

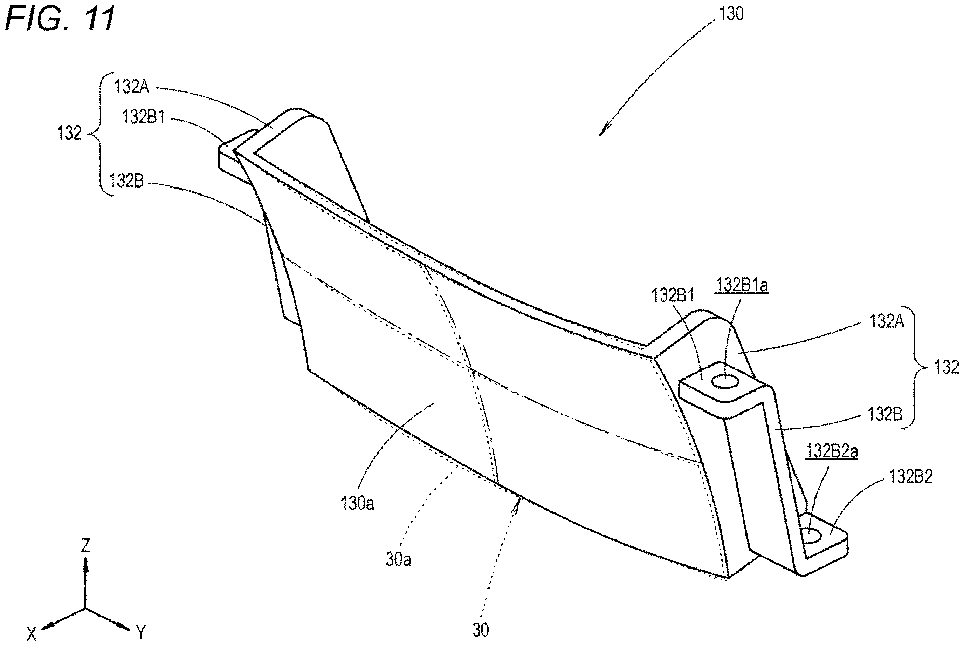

FIG. 10 is a plan view illustrating an image radiation device 110 according to the present modification in a state where a second housing is removed in the image radiation device 110. In the configuration illustrated in FIG. 10, the same components as those illustrated in FIG. 4 are denoted by the same reference numerals, and the description thereof is omitted. FIG. 11 is a perspective view illustrating a first reflection mirror 130 according to the present modification. In the configuration illustrated in FIG. 11, the same components as those illustrated in FIG. 6 are denoted by the same reference numerals, and the description thereof is omitted.

As illustrated in FIGS. 10 and 11, a basic configuration of the image radiation device 110 according to the present modification is the same as that of the above embodiment. However, disposing of the image generating unit 20 according to the present modification is different from that of the above embodiment, and accordingly, configurations of the first reflection mirror 130 and a first housing 152 are partially different from those of the above embodiment.

In the present modification, the image generating unit 20 is disposed at a position deviated to the left side from a center position of a reflection surface 130a of the first reflection mirror 130 and a center position of the reflection surface 40a of the second reflection mirror 40. The image generating unit 20 is supported by a lower wall 152b of the first housing 152 in a state where the liquid crystal panel 22 fitted into an opening 152e of a unit mounting portion 152d faces obliquely upward and rearward and obliquely rightward (obliquely leftward in the front view of the vehicle) (that is, faces the reflection surface 130a of the first reflection mirror 130).

The first reflection mirror 130 according to the present modification is disposed obliquely upward and rearward and obliquely rightward with respect to the liquid crystal panel 22 of the image generating unit 20. The first reflection mirror 130 is disposed at substantially the same position as the first reflection mirror 30 according to the above embodiment, and the reflection surface 130a thereof has a substantially rectangular shape extending in the left-right direction in the front view of the vehicle, but the first reflection mirror 130 is disposed in a state where the reflection surface 130a faces a direction slightly inclined to the left side from a forward front direction. Accordingly, in the present modification, the light emitted from the image generating unit 20 is reflected toward the second reflection mirror 40.

The first reflection mirror 130 according to the present modification is also a saddle-shaped reflection mirror. That is, a horizontal sectional shape of the reflection surface 130a of the first reflection mirror 130 is constituted by a convex curve, and a vertical sectional shape of the reflection surface 130a of the first reflection mirror 130 is constituted by a concave curve.

As indicated by a dash-dotted line in FIG. 11, the convex curve constituting the horizontal sectional shape is a substantially arc-shaped convex curve having a relatively large curvature in a substantially left half region of the reflection surface 130a (that is, a region close to the image generating unit 20), and is a substantially arc-shaped convex curve having a relatively small curvature in a substantially right half region of the reflection surface 130a (that is, a region away from the image generating unit 20). That is, the saddle surface of the reflection surface 130a according to the present modification is formed such that the curvature of the convex curve constituting one cross section of the saddle surface changes in accordance with a distance from the image generating unit 20 to each point of the saddle surface.

On the other hand, the concave curve constituting the vertical sectional shape is constituted by a substantially arc-shaped concave curve as in the above embodiment.

In FIG. 11, an outer shape of the reflection surface 30a of the first reflection mirror 30 according to the embodiment, the convex curve constituting the horizontal sectional shape of the reflection surface 30a, and the concave curve constituting the vertical sectional shape of the reflection surface 30a are indicated by broken lines.

In this manner, in the present modification, in the reflection surface 130a of the first reflection mirror 130, the curvature of the convex curve constituting the horizontal cross section is large in a region relatively close to the image generating unit 20, while the curvature of the convex curve constituting the horizontal cross section is small in a region relatively away from the image generating unit 20. Accordingly, the first reflection mirror 130 efficiently reflects, toward the second reflection mirror 40, the light emitted from the image generating unit 20 disposed at a left position.

In the present modification, a pair of left and right columnar projection portions 152f that support the first reflection mirror 130 are formed in the first housing 152. Accordingly, it is possible to prevent in advance flanges 132 of the first reflection mirror 130 from being exposed to the light emitted from the image generating unit 20 or the solar light S, thereby preventing occurrence of stray light.

In the present modification, the flanges 132 are also formed on both left and right side ends of the reflection surface 130a of the first reflection mirror 130. The first reflection mirror 130 is fixed to the first housing 152 via the pair of left and right flanges 132. Each of the flanges 132 includes a side wall 132A and a step-shaped portion 132B as in the above embodiment.

The first reflection mirror 130 is fixed to the first housing 152 by fastening the screw 34 through a screw insertion hole 132B2a in a lower flat portion 132B2 of each of the pair of right and left step-shaped portions 132B in a state where the first reflection mirror 130 is positioned by engagement between a pin 152g and a pin insertion hole 132B1a in an upper flat portion 132B1 of each of the pair of right and left step-shaped portions 132B.

In the present modification, the lower wall 152b of the first housing 152 is formed with the pair of left and right columnar projection portions 152f that support the first reflection mirror 130. In response to the reflection surface 130a of the first reflection mirror 130 facing leftward and forward, the right columnar projection portion 152f is disposed in a state of being displaced forward with respect to the left columnar projection portion 152f.

In the right columnar projection portion 152f, a corner portion on an inner side of a front surface on a peripheral surface of a quadrangular pyramid is chamfered so as not to block the reflected light from the first reflection mirror 130 toward the second reflection mirror 40. Accordingly, an inclined surface 152f1 extending obliquely leftward and forward is formed. On the other hand, the left columnar projection portion 152f is formed in a peripheral surface shape of the quadrangular pyramid because the reflected light from the first reflection mirror 130 toward the second reflection mirror 40 may be blocked.

Substantially the same operation and effect as those of the above embodiment can be exerted even when the configuration of the present modification is adopted.

As in the present modification, the saddle surface of the reflection surface 130a of the first reflection mirror 130 is formed such that the curvature of the convex curve constituting one cross section of the saddle surface changes in accordance with the distance from the image generating unit 20 to each point of the saddle surface. Accordingly, the reflected light from the first reflection mirror 130 can be substantially uniformly incident on the reflection surface 40a of the second reflection mirror 40 even when the image generating unit 20 is disposed at a position shifted in the left-right direction from the center position of the first reflection mirror 130.

In the case of the present modification, the first reflection mirror 130 is reliably supported by the first housing 52, and the reflected light from the first reflection mirror 130 can be prevented from being blocked.

Since the image radiation device 110 according to the present modification also includes a second housing (not illustrated) similar to the second housing 54 according to the above embodiment, it is possible to effectively suppress occurrence of stray light with an inexpensive configuration.

Next, another modification of the embodiment will be described.

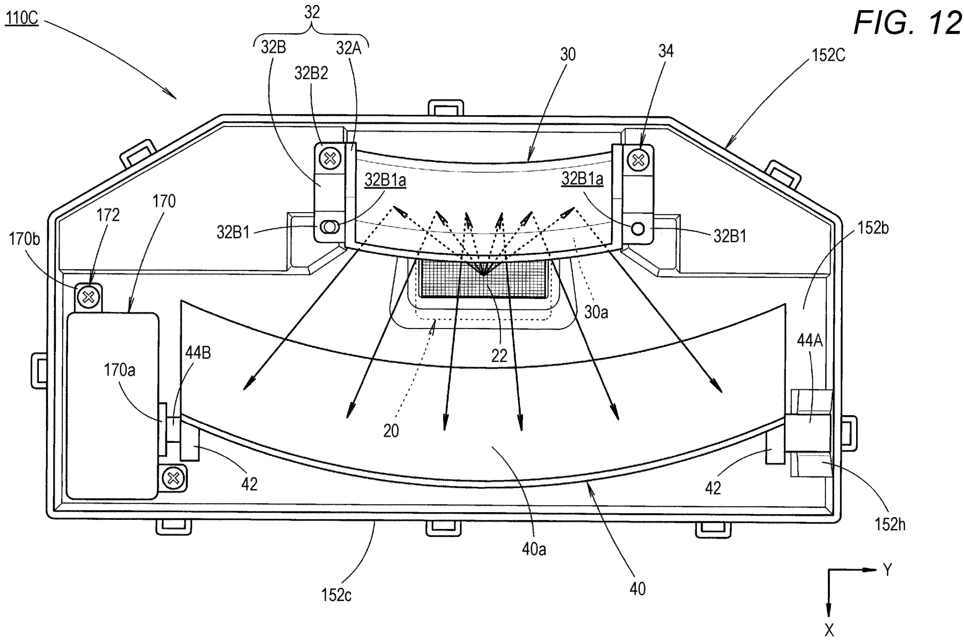

FIG. 12 is a plan view illustrating an image radiation device 110C in a state where a second housing is removed in the other modification. In the configuration illustrated in FIG. 12, the same reference numerals are given to the same configurations as those illustrated in FIGS. 4 and 10, and the description thereof will be omitted.

As illustrated in FIG. 12, a basic configuration of the image radiation device 110C according to the present modification is the same as that of the above embodiment. However, in the image radiation device 110C according to the present modification, a support structure of the second reflection mirror 40 and a configuration of an actuator 170 that rotates the second reflection mirror 40 are different from those of the above embodiment, and accordingly, a configuration of a first housing 152C is partially different from that of the above embodiment.

In the present modification, the first shaft 44A of the second reflection mirror 40 is also placed on a placing portion 152h formed on a peripheral wall 152c of the first housing 152C. On the other hand, the second shaft 44B of the second reflection mirror 40 is directly coupled to an output shaft 170a of the actuator 170.

The actuator 170 is fixed by fastening screws 172 to the lower wall 152b of the first housing 152C at attachment portions 170b formed at two portions of the actuator 170. Therefore, the first housing 152C according to the present modification is not formed with the placing portions 52i and 52j and the clamping portions 52k formed in the first housing 52 according to the above embodiment.

In the present modification, the second housing (not illustrated) is formed with an abutting portion (that is, an abutting portion similar to the abutting portion 54c according to the above embodiment) that abuts against the first shaft 44A placed on the placing portion 152h of the first housing 152C to position the second reflection mirror 40, similarly to the second housing 54 according to the above embodiment. However, the second housing according to the present modification is not formed with an abutting portion corresponding to the abutting portion 54d according to the above embodiment.

In the case of the present modification, orientation of the second reflection mirror 40 can be adjusted by rotating the second reflection mirror 40 by driving of an actuator 148.

Further, the orientation of the second reflection mirror 40 can be adjusted while simplifying the configuration of the first housing 152C and the like.

It should be noted that numerical values shown as specifications in the above embodiment and the modifications thereof are merely examples, and as a matter of course, these numerical values may be set to different values as appropriate.

Further, the present disclosure is not limited to the configurations described in the above embodiment and the modifications thereof, and a configuration added with various other changes may be adopted.

The present application is based on the priority based on Japanese patent application No. 2021-189737 filed on November 22, 2021, Japanese patent application No. 2021-189738 filed on November 22, 2021, and Japanese patent application No. 2021-189739 filed on November 22, 2021, and the entire contents described in the Japanese patent applications are incorporated herein by reference.

## Claims

1. An image radiation device configured to project a display image on an image display part, the image radiation device comprising:
an image generating unit configured to generate the display image; and
first and second reflection mirrors configured to sequentially reflect light emitted from the image generating unit toward the image display part,
wherein a reflection surface of the first reflection mirror is a saddle surface.

2. The image radiation device according to claim 1,
wherein a reflection surface of the second reflection mirror is a concave curved surface.

3. The image radiation device according to claim 1,
wherein the saddle surface is formed such that a curvature of a convex curve constituting one cross section of the saddle surface changes in accordance with a distance from the image generating unit to each point of the saddle surface.

4. The image radiation device according to any of claims 1 to 3,
wherein the image generating unit is configured to generate the display image as an image having a rectangular shape, and
wherein on the reflection surface of the first reflection mirror, a sectional shape along a first direction parallel to a long side of the rectangular shape is constituted by a convex curve, and a sectional shape along a second direction parallel to a short side of the rectangular shape is constituted by a concave curve.

5. The image radiation device according to any of claims 1 to 3, further comprising:
a housing configured to house the first reflection mirror and the second reflection mirror,
wherein a pair of flanges are formed on both side ends of the reflection surface of the first reflection mirror, respectively, and
wherein the first reflection mirror is fixed to the housing via the pair of flanges.

6. An image radiation device configured to project a display image on an image display part, the image radiation device comprising:
an image generating unit configured to generate the display image;
a reflection mirror configured to reflect light emitted from the image generating unit toward the image display part; and
a housing configured to house the reflection mirror,
wherein the housing comprises a first housing configured to support the reflection mirror and a second housing attached to the first housing, and
wherein the first housing or the second housing is formed with a light shielding piece configured to cover a peripheral region of a reflection surface of the reflection mirror.

7. The image radiation device according to claim 6,
wherein the second housing is formed with an opening configured to allow reflected light from the reflection mirror toward the image display part to pass therethrough, and
wherein the light shielding piece extends from a peripheral region of the opening in the second housing to define a plate shape.

8. The image radiation device according to claim 7,
wherein the reflection mirror comprises first and second reflection mirrors configured to sequentially reflect light emitted from the image generating unit toward the image display part,
wherein the light shielding piece covers a peripheral region of a reflection surface of the first reflection mirror, and
wherein a tip end of the light shielding piece is formed with a cut portion configured to allow reflected light from the first reflection mirror to be incident on the second reflection mirror.

9. The image radiation device according to any of claims 6 to 8,
wherein the first housing is formed with a columnar projection portion configured to support the reflection mirror, and
wherein the columnar projection portion has a peripheral surface shape that does not block reflected light from the reflection mirror.

10. An image radiation device configured to display a display image on an image display part, the image radiation device comprising:
an image generating unit configured to generate the display image;
a reflection mirror configured to reflect light emitted from the image generating unit toward the image display part; and
a housing configured to house the reflection mirror,
wherein the housing comprises a first housing and a second housing attached to the first housing,
wherein a side end of a reflection surface of the reflection mirror is formed with a shaft extending in a direction away from the reflection surface,
wherein the first housing is formed with a placing portion on which the shaft is placed, and
wherein the second housing is formed with an abutting portion configured to abut against the shaft placed on the placing portion to position the reflection mirror.

11. The image radiation device according to claim 10,
wherein the placing portion is formed on an inner surface of a peripheral wall of the first housing.

12. The image radiation device according to claim 10 or 11,
wherein the abutting portion is formed as a rib having an arc-shaped concavity.

13. The image radiation device according to claim 10 or 11,
wherein the shaft comprises first and second shafts disposed on a same axis on both side ends of the reflection surface,
wherein the second shaft is fixed with a lever member extending in a direction intersecting the axis, and
wherein the lever member is coupled to an actuator configured to rotate the reflection mirror around the axis.

14. The image radiation device according to claim 13,
wherein an inner surface of a peripheral wall of the first housing is formed with a second placing portion on which the lever member is placed, and
wherein the placing portion on which the second shaft is placed is formed at a position on a first shaft side relative to the lever member.
